# FASCICULE DE BREVET EUROPEEN

(11) **EP 0 816 036 B1**
(45) Date de publication et mention de la délivrance du brevet: **29.08.2001**
(21) Numéro de dépôt: 97810405.7
(22) Date de dépôt: 25.06.1997
(51) Int. Cl.: B29B 17/00, B09B 3/00

(54) **Procédé et appareil pour ramollir et écraser les bouteilles en matériau thermoplastique**
Verfahren und Vorrichtung zum Aufweichen und Quetschen von thermoplastischen Flaschen
Method and apparatus for softening and crushing thermoplastic bottles

(30) Priorité: 25.06.1996 CH 157396
(43) Date de publication de la demande: 07.01.1998
(73) Titulaire: Shavit, Henri, CH-4056 Basel (CH); Chevassu, Jean-Pierre, 68510 Geispitzen (FR)
(72) Inventeur: Shavit, Henri, 4056 Bâle (CH)
(74) Mandataire: Nithardt, Roland

(56) Documents cités:
- FR-A- 2 231 497
- FR-A- 2 687 085
- FR-A- 2 691 648
- FR-A- 2 712 529

## Description

La présente invention concerne un procédé et un appareil pour réduire, par ramollissement thermique et écrasement mécanique, le volume occupé par une bouteille, vide, en matériau thermoplastique, par introduction d'un flux d'air chaud dans la bouteille (1), au travers de son goulot (1b), par un tube (2) pénétrant dans le goulot (1b), le flux d'air chaud ainsi introduit dans la bouteille (1) s'échappant de celle-ci par son goulot (1b) en utilisant l'espace laissé libre entre le flanc intérieur du goulot (1b) et la surface extérieure du tube (2) qui s'y trouve introduit.

La nécessité de réduire, après usage, le volume des bouteilles thermoplastiques est reconnue et fait déjà l'objet de nombreux brevets.

Certains font appel uniquement à des sollicitations mécaniques pour écraser ces bouteilles, tel que p. ex. le brevet US - 5,133,124 - Burroughs.

D'autres font appel d'abord à une action thermique pour ramollir la bouteille avant son écrasement.

Dans certains de ces brevets le ramollissement est obtenu en mettant la bouteille en contact avec de l'eau amenée à la température d'ébullition. Un tel procédé est décrit p. ex. dans le brevet FR-A-2 693 144. Gros, L'utilisation d'eau bouillante comme moyen de ramollissement thermique rend son utilisation industrielle, p. ex. à l'entrée des magasins d'alimentation collecteurs dangereuse, lente et énergétiquement peu rentable.

D'autres brevets, plus nombreux, décrivent des procédés ou des appareils utilisant le rayonnement calorifique de résistances électriques, disposées autour de la bouteille, pour ramollir celle-ci. On peut citer les brevets FR-A-2 673 390-Salomon / FR-A-2 692 190 - Metayer / FR-A-2 694 722 - Gros / FR-A-2 596 688-Prieur.

Certains brevets, enfin, tel le brevet FR-A-2 691 648 - Levasseur / décrivent des procédés et des dispositifs utilisant de la vapeur d'eau chaude qu'on injecte par son goulot dans le volume intérieur de la bouteille pour ramollir celle-ci.

On connaît également par la publication FR-A-2 231 497 un dispositif pour ramollir une bouteille en plastique permettant d'injecter de l'air chaud au moyen d'un tube partiellement introduit dans la bouteille, dans le but de chauffer les parois qui, de par leur faible épaisseur, se ramollissent très rapidement pour pouvoir froisser la bouteille comme un simple morceau de papier.

Tous ces procédés ont comme point commun que le fluide ou le rayonnement thermique servant à ramollir la bouteille est appliqué de manière relativement uniforme sur toutes les parties de celle-ci, sans tenir compte du fait que ces bouteilles présentent des parties très fines, telles les parois latérales, des parties plus épaisses, telles le culot et des parties très épaisses, telles le goulot et son filetage. Distribuer dans un tel cas l'énergie calorifique uniformément sur l'ensemble des surfaces oblige de travailler à une température ne dépassant pas trop la température de ramollissement du matériau de la bouteille pour éviter que les parties fines atteignent leur température de fusion lorsque les parties épaisses sont enfin ramollies. Ces procédés sont donc obligatoirement lents et par ce fait commercialement peu rentables.

L'objet de la présente invention est d'abord un procédé permettant de distribuer une énergie calorifique élevée modulée en fonction de l'épaisseur de chacune des trois parties de la bouteille à ramollir, c'est à dire de fournir dans un même temps une quantité d'énergie plus importante aux parties épaisses et moins importante aux parties fines, le but étant que toutes les parties de la bouteille, corps, culot et goulot atteignent le point de ramollissement relativement en même temps. Cette modulation de la distribution énergétique permet de travailler avec un flux gazeux dont la température est beaucoup plus élevée que la température de ramollissement du matériau de la bouteille, donc très rapidement. L'autre objet de l'invention est d'atteindre le but précité avec un minimum de perte énergétique, c.a.d. en assurant que la majorité de l'énergie distribuée sera captée par la bouteille et non par des éléments entourant celle-ci.

Dans ce but, l'invention concerne un procédé du genre indiqué en préambule, caractérisé en ce que le tube est profondément introduit dans le corps de la bouteille, en ce que son embouchure, d'où le flux d'air chaud est éjecté à une température égale ou supérieure à la température de fusion du matériau thermoplastique constituant la bouteille, est positionnée à proximité de la face interne du culot de la bouteille, et en ce que le flux d'air chaud s'échappe du tube si rapidement qu'il est projeté directement sur ladite face interne du culot.

Le flux d'air chaud qui s'échappe du goulot de la bouteille par l'espace laissé libre entre le flanc intérieur du goulot et la surface extérieure du tube est repris par un déflecteur qui l'oriente de manière à ce qu'il s'écoule le long du flanc extérieur du goulot et du col de la bouteille.

D'une manière avantageuse, alors que la bouteille est progressivement écrasée, par son culot, d'abord entre deux tambours rotatifs, le déflecteur (3) suit la bouteille sur le parcours disponible.

Par ailleurs, alors que seule une partie du col de la bouteille et le goulot de celle-ci n'ont pas encore été écrasés entre les deux tambours rotatifs, le flux d'air chaud sortant de l'embouchure du tube est projeté frontalement contre le goulot de la bouteille, le tube et son embouchure se trouvant alors hors de la cavité de la bouteille.

Le flux d'air chaud peut être interrompu à un moment déterminé au cours ou après l'écrasement de chaque bouteille.

L'invention concerne également un appareil pour la mise en oeuvre du procédé ci-dessus et est caractérisé en ce que le mouvement positionnant le tube dans la bouteille peut avoir pour élément moteur la pression qu'exerce, dans un cylindre, le flux d'air lui-même, non encore chauffé, sur un piston solidaire du tube, la remise en position initiale du tube (2) étant assurée par des ressorts ou tout autre moyen connu en soi.

L'appareil selon la revendication comprend un déflecteur lié au piston par un système de tringles et de butées, ledit déflecteur étant agencé pour reprendre le flux d'air chaud qui s'échappe du goulot de la bouteille par l'espace laissé libre entre le flanc intérieur du goulot et la surface extérieure du tube et l'orienter de manière à ce qu'il s'écoule le long du flanc extérieur du goulot et du col de la bouteille.

Le déflecteur, dont l'axe coïncide avec l'axe de la bouteille et qui est mobile le long de cet axe, peut se poser en appui sur le goulot de la bouteille pour en assurer le centrage par des moyens connus en soi et ce aussi pendant le déplacement axial de la bouteille lorsque le fond de celle-ci puis le corps lui-même de la bouteille est progressivement écrasé entre les deux tambours rotatifs, hormis évidemment dans la dernière portion de cette opération d'écrasement, des butées empêchant alors que l'avance du déflecteur ne le mette en contact avec les tambours rotatifs.

Le déflecteur, par la pression qu'il exerce axialement sur le col de la bouteille permet aux deux tambours rotatifs, contre lesquels le fond de la bouteille repose aux points de contact, de mieux entraîner la bouteille pour son écrasement.

D'une manière avantageuse, la surface des tambours rotatifs peut être moletée ou posséder un relief ou être équipée de pointes escamotables ou non, ou encore posséder un revêtement assurant une meilleure adhérence avec toutes les surfaces extérieures de la bouteille lors de l'entraînement et l'écrasement de celle-ci.

Les deux tambours rotatifs, dont l'un au moins est entraîné en rotation par des moyens connus en soi, sont pressés l'un contre l'autre par des moyens connus en soi, l'un au moins des tambours rotatifs pouvant être déplacé perpendiculairement à son axe de rotation de manière à permettre une variation de l'entraxe des deux tambours.

Le mouvement de rotation des tambours rotatifs peut être continu ou discontinu et la vitesse de rotation de ces tambours rotatifs peut, si nécessaire, être variée au cours du cycle, par exemple en fonction de la variation de leur entraxe.

Certaines des opérations réalisées par l'appareil peuvent être volontairement rendues visibles à l'utilisateur.

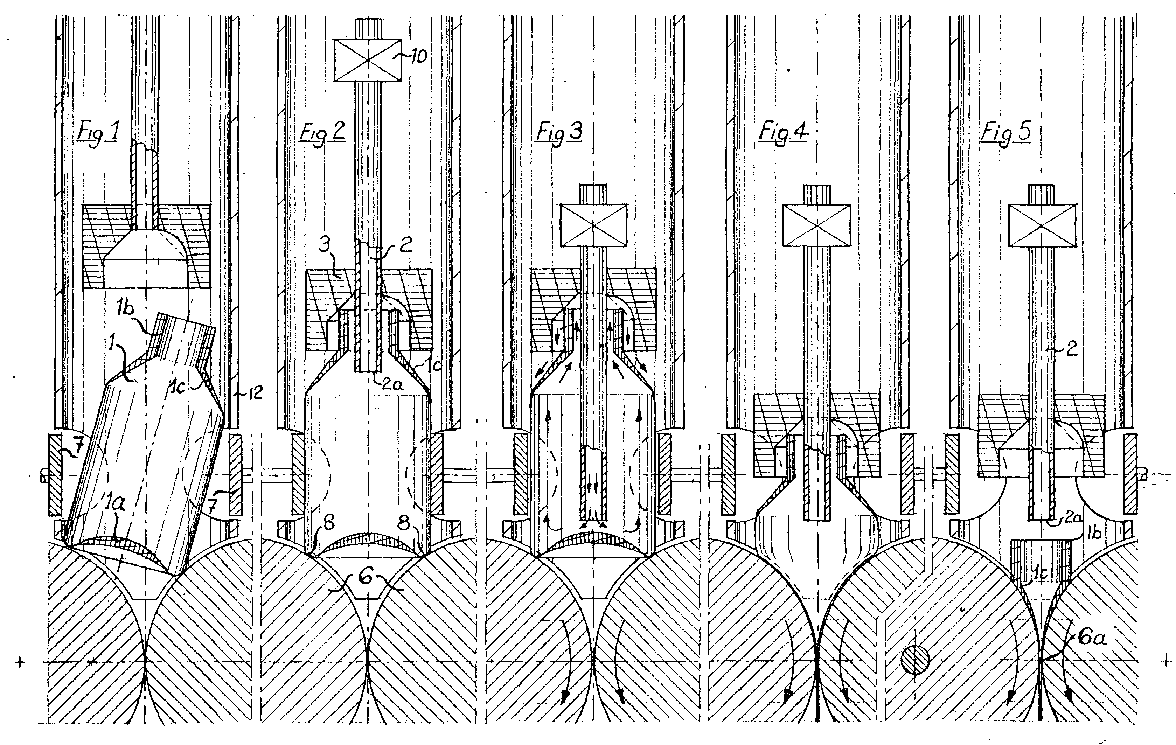

La présente invention et ses avantages apparaîtront mieux dans la description suivante d'un exemple de réalisation, en référence aux dessins annexés, dans lesquels les figures 1 à 5 montrent, très schématiquement, une variante possible du procédé utilisé.

Fig. 1. La bouteille 1. est d'abord placée verticalement, culot 1a vers le bas, à cheval entre 2 tambours rotatifs d'écrasement 6 dont les axes sont horizontaux et parallèles. Elle est maintenue en place par la partie inférieure du cylindre 12 ou par tout autre moyen approprié.

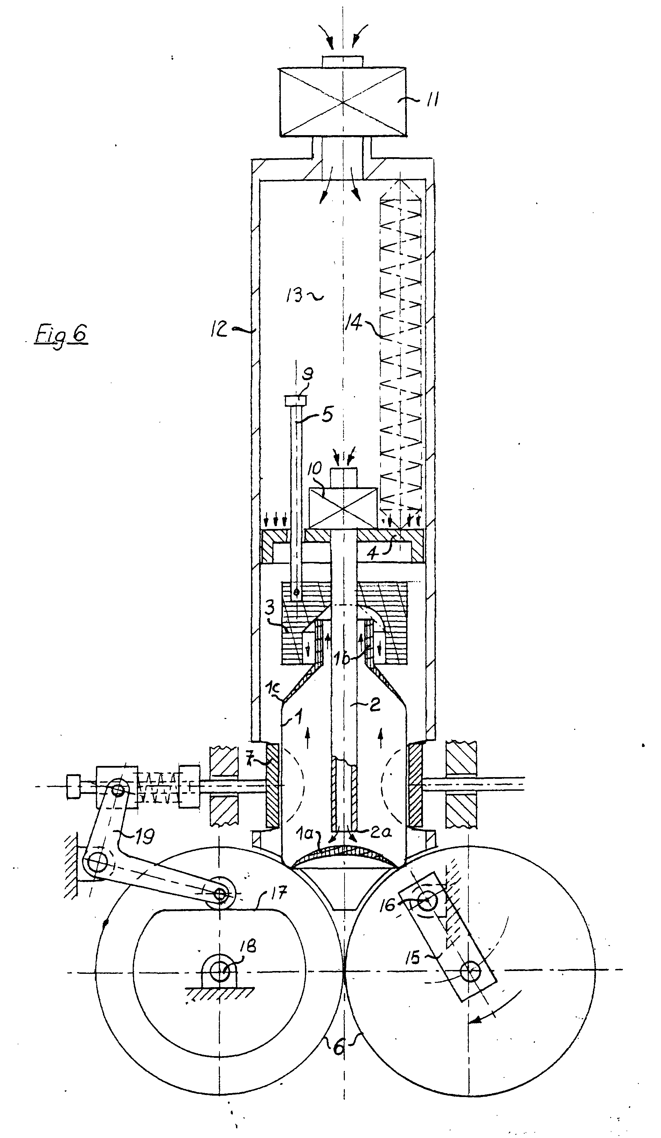

Fig.2. Les mors de centrage 7 positionnent la bouteille 1 dans l'axe du cylindre 12. L'ensemble constitué par le tube 2 d'amenée de l'air chaud et le déflecteur 3 commence à descendre. Le déflecteur 3 se pose sur le goulot 1b. Il assure ainsi un centrage supplémentaire de la bouteille et exerce aux points de contact 8 entre le culot 1a et les tambours rotatifs 6 une pression aidant à l'entraînement de la bouteille entre les tambours rotatifs. Le flux d'air chaud émis par le tube 2 peut être activé déjà avant que le déflecteur 3 ne se pose sur le goulot vu qu'un certain temps est nécessaire à l'élément de chauffage 10 pour qu'il mette l'air à la température voulue.

Fig.3. Le tube 2 descend profondément dans la bouteille et se met en position face au fond 1a de la bouteille. L'embouchure 2a du tube 2 est positionnée à proximité de la face interne du culot 1a de la bouteille 1, à une distance égale de préférence entre 4 et 20 mm, au maximum 50 mm. Le flux d'air chaud, pouvant atteindre plusieurs centaines de degrés, est projeté directement sur le culot 1a de la bouteille et ce à vitesse relativement élevée. Cette vitesse d'écoulement du flux d'air se ralenti notablement lors de sa remontée dans le corps de la bouteille, vu la grande section disponible, pour s'accélérer ensuite notablement dans l'étranglement que constitue le goulot 1b. Au niveau de ce goulot la section disponible pour l'échappement de l'air chaud est encore réduite par la présence du tube 2 qui s'y trouve. Le déflecteur 3, en appui sur le goulot en deux points au moins, renvoie l'air chaud qui s'échappe du goulot vers les flancs extérieurs de celui-ci et le long du col 1c de la bouteille.

L'épaisseur des parois d'une bouteille plastique est, d'une manière relative, inversement proportionnelle à l'éloignement de ces parois de l'axe de la bouteille. Le procédé sujet de cette invention met les parois de la bouteille en contact avec un flux d'air chaud dont la vitesse d'écoulement, le long de ces parois, est, lui, relativement proportionnel aux différentes épaisseur de celles-ci. Le transfert d'énergie entre le flux d'air chaud et les parois de la bouteille étant, lui aussi, relativement proportionnel à la vitesse de ce flux il s'ensuit qu'on transmet plus d'énergie aux parties épaisses de la bouteille et moins aux parties fines. On peut ainsi utiliser un flux d'air dont la température dépasse de beaucoup la température de ramollissement du matériau de la bouteille sans courir le risque de voir les partie fines atteindre le point de fusion avant que les parties épaisses ne soient ramollies.

Fig. 4. Lorsque la bouteille 1 passe entre les tambours d'écrasement 6 le déflecteur 3 suit le mouvement de descente du goulot 1b de la bouteille 1 et continue donc à remplir sa fonction.

Fig. 5. Lorsque toute la partie de la bouteille située en dessous du goulot est déjà écrasée entre les deux tambours rotatifs 6 et que seul le goulot 1b et éventuellement une partie du col 1c de la bouteille se trouvent encore au-dessus du point d'écrasement 6a le tuyau 2 d'amenée de l'air chaud se trouve en dehors de la bouteille et le flux d'air chaud qui en sort est projeté frontalement directement sur le goulot 1b. Le déflecteur 3 est lui retenu dans son avance pour qu'il n'entre pas en contact avec les tambours rotatifs 6 par des butées non représentées dans la figure 5.

Le goulot étant généralement la partie la plus épaisse d'une bouteille est par là même la partie de la bouteille qui a besoin le plus d'énergie et de temps pour se ramollir. On constate par les Fig 4. et 5. que le procédé sujet de l'invention assure au goulot 1b de la bouteille 1 la plus grande distribution d'énergie et aussi la plus longue. C'est en effet au niveau du goulot 1b que la vitesse d'écoulement de l'air chaud sera la plus élevée et en conséquence aussi le transfert d'énergie. Ce sera aussi au niveau du goulot que l'air chaud, grâce au déflecteur 3 agira sur la face intérieure et extérieure de la paroi, doublant ainsi la surface de contact avec le fluide chaud. Le goulot 1b étant écrasé en dernier par les tambours rotatifs 6 sera aussi la partie de la bouteille la plus longtemps soumise au flux gazeux chaud. Le flux gazeux chaud étant émis par l'embouchure 2a du tuyau 2 à l'intérieur et au fond de la bouteille 1 il en résulte que toute l'énergie thermique libérée ne peut d'abord être absorbée que par la bouteille 1 elle-même, d'où une utilisation optimale de l'énergie calorifique fournie. L'ensemble des opérations représentées par les Fig. 1. à 5. résume donc un procédé extrêmement rapide et énergétiquement rentable sur la base duquel un appareil industriellement utilisable par différents publics peut être conçu.

Lorsque la bouteille est entièrement écrasée, ou peu avant que ce point ne soit atteint, le flux d'air chaud est interrompu et l'ensemble constitué par le tube 2 et le déflecteur 3 se remet dans la position initiale telle que représentée Fig. 1.

La machine pour la mise en oeuvre du procédé est schématiquement représentée par la Fig. 6.,étant bien entendu que celle-ci n'en représente qu'une des variantes possibles.

Le tube 2 et le déflecteur 3 y sont représentés déjà en position »basse", c.a.d. avec l'embouchure 2a du tube 2 à proximité adéquate du culot 1a de la bouteille 1 pour que le flux d'air chaud qui s'en échappe atteigne directement ce culot 1a et le déflecteur 3 déjà en appui sur le goulot 1b de la bouteille 1.

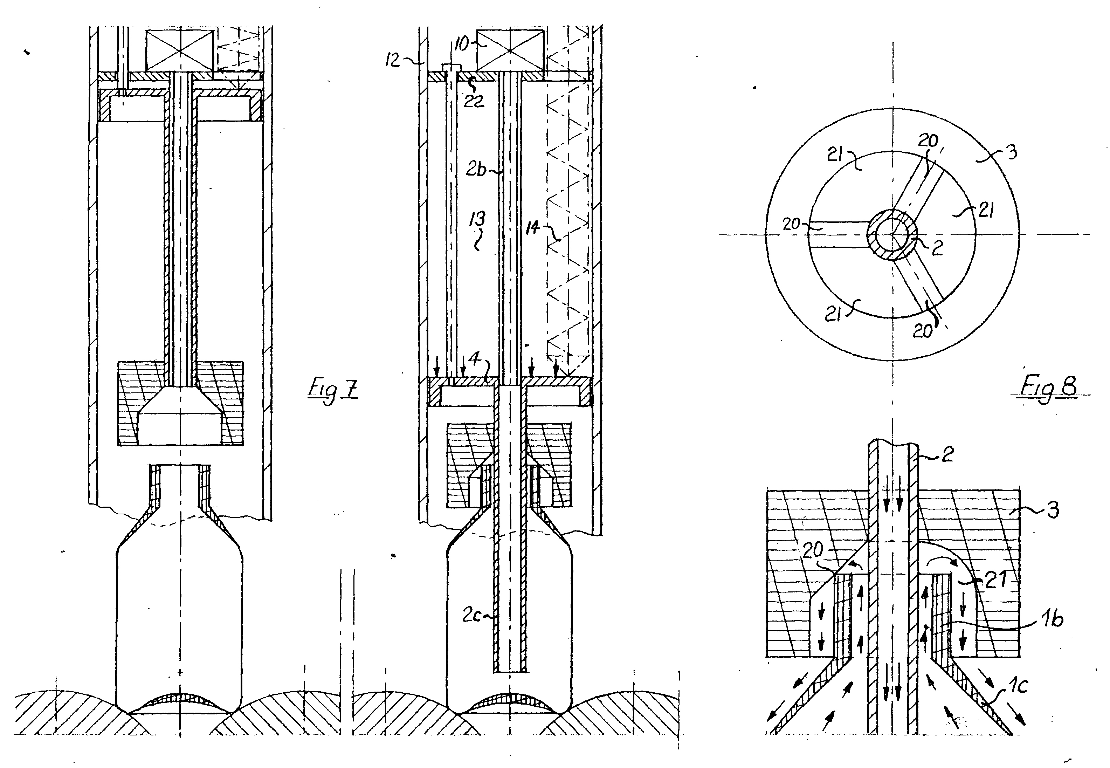

Les deux Fig.7. représentent, dans deux positions du fonctionnement et de manière schématique une variante de réalisation du tube d'amenée du flux d'air chaud caractérisée en ce que ce tube est réalisé en deux éléments coulissant l'un dans l'autre télescopiquement. Le tube supérieur fixe 2b comporte l'élément de chauffage du flux d'air 10. Dans la variante décrite il est solidaire du cylindre 12 par l'intermédiaire du disque 22. Le tube inférieur 2a est axialement mobile et est solidaire, dans cette même variante, du piston 4. Ce piston 4 peut se déplacer dans le cylindre 12 sous l'effet combiné de la pression du flux d'air dans la cavité 13 d'une part et des ressorts de rappel 14 d'autre part.

Chacun de ces tubes peut être réalisé dans des matériaux adéquats ou des combinaisons de matériaux adéquats quant à leurs qualités mécaniques, isolantes et antiadhésives. L'élément de chauffage 10 peut, comme variante, être intégré à l'intérieur du tube 2 ou du tube 2a ou 2b.

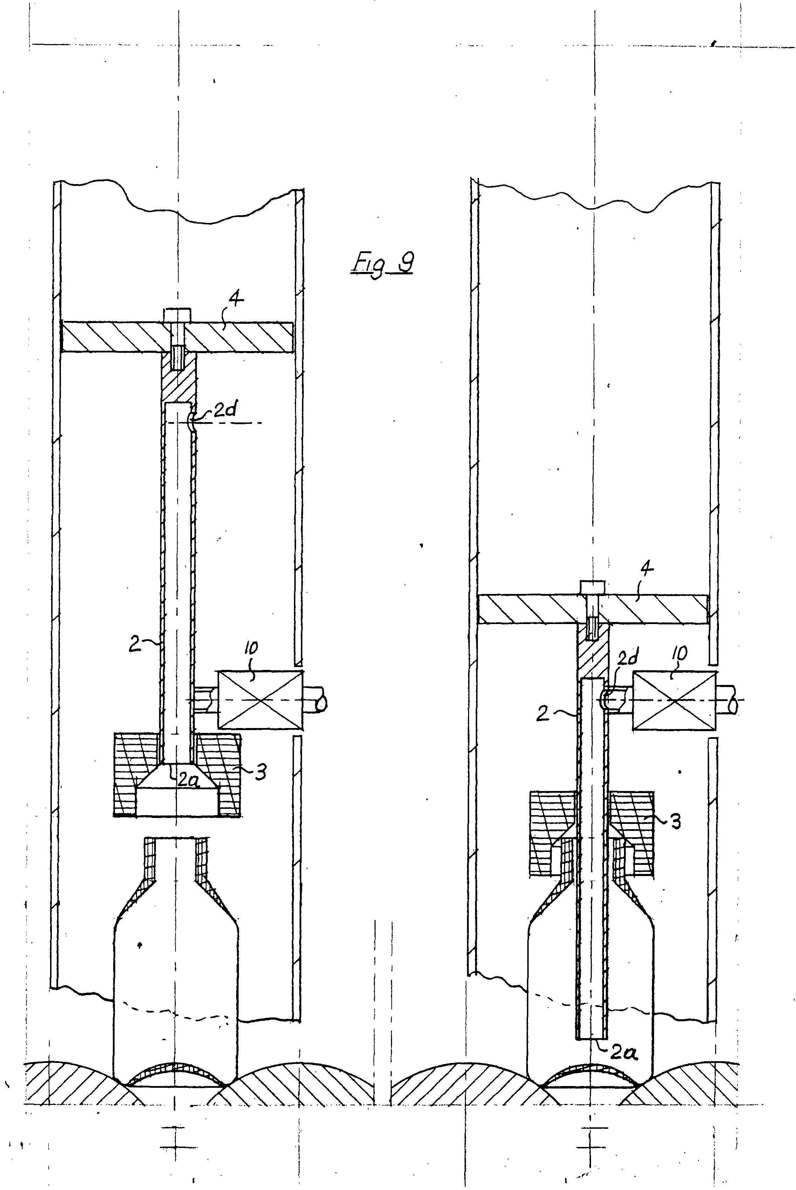

La Fig. 9 représente schématiquement une variante où l'élément de chauffage 10 est fixe et situé entre le piston 4 et le déflecteur 3. L'air passe par cet élément de chauffage pour être mis à température de travail. Le tube 2 présente, dans sa section située entre le piston 4 et le déflecteur 3, une ou plusieurs ouvertures 2d permettant, lorsque le tube 2 est en position dans la bouteille, l'admission de l'air chaud fourni au travers de l'élément de chauffage 10. Le passage de l'air chaud de l'élément de chauffage 10 au tube 2 peut être réalisé de différentes manières connues en soit.

Fig. 8. Le déflecteur 3 peut être ainsi conçu que tout en se posant sur le goulot 1b de la bouteille 1 en 20 et tout en centrant la bouteille pour y permettre une introduction correcte du tube 2 ou 2a, il permette de dévier le flux d'air chaud sortant de la bouteille et de le diriger vers le flanc extérieur du goulot 1b et le long du col de la bouteille. Pour ce faire la surface intérieure du déflecteur peut présenter, dans cette variante, plusieurs ponts coniques 20 servant au centrage de la bouteille, l'espace 21 entre ces ponts laissant un passage pour le flux d'air sortant du goulot de la bouteille. La surface du déflecteur ou sa matière même doit avantageusement avoir des qualités thermiquement isolantes et antiadhésives.

La Fig. 6. montre d'autre part, toujours en tant que variantes possibles, divers éléments dont nous indiquons ci dessous des modes possibles de fonctionnement.

L'un au moins des tambours rotatifs 6 doit être équipé de moyens d'entraînement connus en soi. Ceux-ci peuvent lui assurer une rotation continue ou discontinue, à vitesse constante ou à des vitesses variables. Une version peut prévoir une relation entre la vitesse de rotation des tambours rotatifs et la modification, pendant l'écrasement de la bouteille, de l'entraxe entre les deux tambours rotatifs.

L'un au moins des tambours rotatifs 6 devrait avantageusement être équipé pour lui permettre de se déplacer parallèlement à son axe de rotation. Un bras de levier 15 centré en 16 peut permettre un tel déplacement et produire en plus, par le poids de l'ensemble, la pression nécessaire à l'écrasement de la bouteille. D'autres moyens, connus en soi, peuvent être utilisés pour assurer l'écrasement de la bouteille.

Une came 17 montée sur l'axe 18 d'un des tambours rotatifs 6 peut, dans une variante possible, par un jeu de leviers 19 représenté très schématiquement dans la Fig. 6., actionner un mécanisme de centrage agissant sur les mors de centrage 7. Ce mécanisme de centrage peut être conçu pour accepter différentes grandeurs et formes de bouteilles.

Divers dispositifs, non représentés dans les dessins, peuvent être adjoints à une telle machine;
- Dispositif empêchant d'introduire des bouteilles mal orientées, encore bouchées ou contenant encore le contenu.
- Dispositif permettant d'accumuler une pluralité de bouteilles que la machine traitera une à une automatiquement.
- Dispositif triant les bouteilles selon les matériaux qui les constituent et /ou réglant les paramètres de fonctionnement de la machine en fonction de ces matériaux.
- Dispositif distribuant à l'utilisateur un remboursement ou un bonus, sous quelque forme que ce soit, en contrepartie des bouteilles remises.
- Dispositif permettant une visualisation, par l'utilisateur, de certains des processus effectués par la machine.

## Revendications

1. Procédé pour réduire, par ramollissement thermique et écrasement mécanique, le volume occupé par une bouteille, vide, en matériau thermoplastique, par introduction d'un flux d'air chaud dans la bouteille (1), au travers de son goulot (1b), par un tube (2) pénétrant dans le goulot (1b), le flux d'air chaud ainsi introduit dans la bouteille (1) s'échappant de celle-ci par son goulot (1b) en utilisant l'espace laissé libre entre le flanc intérieur du goulot (1b) et la surface extérieure du tube (2) qui s'y trouve introduit, **caractérisé en ce que** le tube (2) est profondément introduit dans le corps de la bouteille (1), en ce que son embouchure (2a), d'où le flux d'air chaud est éjecté à une température égale ou supérieure à la température de fusion du matériau thermoplastique constituant la bouteille, est positionnée à proximité de la face interne du culot (1a) de la bouteille (1), et en ce que le flux d'air chaud s'échappe du tube (2) si rapidement qu'il est projeté directement sur ladite face interne du culot (1a).

2. Procédé selon la revendication 1 **caractérisé en ce que** le flux d'air chaud qui s'échappe du goulot (1b) de la bouteille (1) par l'espace laissé libre entre le flanc intérieur du goulot (1b) et la surface extérieure du tube (2) est repris par un déflecteur (3) qui l'oriente de manière à ce qu'il s'écoule le long du flanc extérieur du goulot (1b) et du col (1c) de la bouteille.

3. Procédé selon les revendications 1 et 2, caractérisé en ceci qu'alors que la bouteille (1) est progressivement écrasée, par son culot (1a) d'abord, entre deux tambours rotatifs (6), le déflecteur (3) suit la bouteille (1) sur le parcours disponible.

4. Procédé selon les revendications 1 à 3, **caractérisé en ce que**, alors que seule une partie du col (lc) de la bouteille (1) et le goulot (1b) de celle-ci n'ont pas encore été écrasés entre les deux tambours rotatifs (6), le flux d'air chaud sortant de l'embouchure (2a) du tube (2) est projeté frontalement contre le goulot (1b) de la bouteille (1), le tube (2) et son embouchure (2a) se trouvant alors hors de la cavité de la bouteille (1).

5. Procédé selon les revendications 1 à 4, **caractérisé en ce que** le flux d'air chaud peut être interrompu à un moment déterminé au cours ou après l'écrasement de chaque bouteille.

6. Appareil pour la mise en oeuvre du procédé selon les revendications 1 à 5 comprenant un tube mobile (2) dans un goulot d'une bouteille et des moyens pour introduire un flux d'air chaud par le tube, **caractérisé en ce que** le mouvement positionnant le tube (2) dans la bouteille (1) a pour élément moteur la pression qu'exerce, dans un cylindre (12), le flux d'air lui-même, non encore chauffé, sur un piston (4) solidaire du tube (2), la remise en position initiale du tube (2) étant assurée par des ressorts (14) ou tout autre moyen connu en soi.

7. Appareil selon la revendication 6, **caractérisé en ce qu**'il comprend un déflecteur (3) lié au piston (4) par un système de tringles et de butées, ledit déflecteur (3) étant agencé pour reprendre le flux d'air chaud qui s'échappe du goulot (1b) de la bouteille (1) par l'espace laissé libre entre le flanc intérieur du goulot (1b) et la surface extérieure du tube (2) et l'orienter de manière à ce qu'il s'écoule le long du flanc extérieur du goulot (1b) et du col (1c) de la bouteille.

8. Appareil selon les revendications 6 à 7, **caractérisé en ce que** le déflecteur (3), dont l'axe coïncide avec l'axe de la bouteille (1) et qui est mobile le long de cet axe, peut se poser en appui sur le goulot (1b) de la bouteille (1) pour en assurer le centrage par des moyens connus en soi et ce aussi pendant le déplacement axial de la bouteille (1) lorsque le fond (la) de celle-ci puis le corps lui-même de la bouteille (1) est progressivement écrasé entre les deux tambours rotatifs (6), hormis évidemment dans la dernière portion de cette opération d'écrasement, des butées (9) empêchant alors que l'avance du déflecteur (3) ne le mette en contact avec les tambours rotatifs (6).

9. Appareil selon les revendications 6 à 8, **caractérisé en ce que** le déflecteur (3), par la pression qu'il exerce axialement sur le col (1b) de la bouteille (1) permet aux deux tambours rotatifs (6), contre lesquels le fond (la) de la bouteille (1) repose aux points de contact (8), de mieux entraîner la bouteille pour son écrasement.

10. Appareil selon les revendications 6 à 9, **caractérisé en ce que** la surface des tambours rotatifs (6) peut être moletée ou posséder un relief ou être équipée de pointes escamotables ou non, ou encore posséder un revêtement assurant une meilleure adhérence avec toutes les surfaces extérieures de la bouteille lors de l'entraînement et l'écrasement de celle-ci.

11. Appareil selon les revendications 6 à 10, **caractérisé en ce que** les deux tambours rotatifs (6), dont l'un au moins est entraîné en rotation par des moyens connus en soi, sont pressés l'un contre l'autre par des moyens connus en soi et que l'un au moins des tambours rotatifs peut être déplacé perpendiculairement à son axe de rotation de manière à permettre une variation de l'entraxe des deux tambours.

12. Appareil selon les revendications 6 à 11, **caractérisé en ce que** le mouvement de rotation des tambours rotatifs (6) peut être continu ou discontinu et que la vitesse de rotation de ces tambours rotatifs peut, si nécessaire, être variée au cours du cycle, par exemple en fonction de la variation de leur entraxe.

13. Appareil selon les revendications 6 à 12, **caractérisé en ce que** certaines des opérations réalisées par l'appareil sont volontairement rendues visibles à l'utilisateur.

## Patentansprüche

1. Verfahren zur Verringerung des von einer leeren Flasche aus thermoplastischem Material eingenommenen Volumens durch thermisches Erweichen und mechanisches Zerdrücken, durch Einleitung eines warmen Luftstromes in die Flasche (1), durch ihren Hals (1b), über ein in den Hals (1b) eingeführtes Rohr (2), wobei der so in die Flasche (1) eingeleitete warme Luftstrom aus derselben durch deren Hals (1b) entweicht, indem er den freibleibenden Raum zwischen der Innenflanke des Halses (1b) und der Außenfläche des Rohres (2) nutzt, das dort eingeführt ist, **dadurch gekennzeichnet**, daß das Rohr (2) tief in den Körper der Flasche (1) eingeführt wird, wobei dessen Mündung (2a), aus der der warme Luftstrom mit einer Temperatur ausgestoßen wird, die gleich oder höher als die Schmelztemperatur des thermoplastischen Materials ist, aus dem die Flasche besteht, in der Nähe der Innenseite des Bodens (la) der Flasche (1) positioniert wird, und wobei der warme Luftstrom so schnell aus dem Rohr (2) entweicht, daß er direkt auf die Innenseite des Bodens (1a) gerichtet wird.

2. Verfahren nach Anspruch 1, **dadurch gekennzeichnet**, daß der warme Luftstrom, der aus dem Hals (1b) der Flasche (1) durch den zwischen der Innenflanke des Halses (1b) und der Außenfläche des Rohres (2) freigelassenen Raum entweicht, von einer Ablenkeinrichtung (3) wieder aufgenommen wird, die ihn so ausrichtet, daß er an der Außenflanke des Halses (1b) und des Halsansatzes (1c) der Flasche entlangströmt.

3. Verfahren nach den Ansprüchen 1 und 2, **dadurch gekennzeichnet**, daß die Flasche (1) zuerst mit ihrem Boden (1a) nach und nach zwischen zwei sich drehenden Walzen (6) zusammengedrückt wird, wobei die Ablenkeinrichtung (3) der Flasche (1) auf dem verfügbaren Weg folgt.

4. Verfahren nach den Ansprüchen 1 bis 3, **dadurch gekennzeichnet**, daß wenn nur ein Teil des Halsansatzes (lc) der Flasche (1) und der Hals (1b) derselben noch nicht zwischen den beiden sich drehenden Walzen (6) zerdrückt ist, der aus der Mündung (2a) des Rohres (2) austretende warme Luftstrom frontal gegen den Hals (1b) der Flasche (1) gerichtet wird, wobei das Rohr (2) und dessen Mündung (2a) sich dann außerhalb des Hohlraumes der Flasche (1) befinden.

5. Verfahren nach den Ansprüchen 1 bis 4, **dadurch gekennzeichnet**, daß der warme Luftstrom zu einem festgelegten Zeitpunkt während oder nach dem Zerdrücken jeder Flasche unterbrochen werden kann.

6. Vorrichtung zur Durchführung des Verfahrens nach den Ansprüchen 1 bis 5, mit einem beweglichen Rohr (2) in dem Hals einer Flasche sowie Mitteln zum Einleiten eines warmen Luftstromes durch das Rohr, **dadurch gekennzeichnet**, daß die Bewegung zur Positionierung des Rohres (2) in der Flasche als antreibendes Element den Druck hat, den der Strom der noch nicht erwärmten Luft auf einen starr mit dem Rohr (2) verbundenen Kolben (4) ausübt, wobei die Rückführung des Rohres (2) in die Ausgangsposition durch Federn (14) oder jedes beliebige andere, an sich bekannte Mittel sichergestellt sein kann.

7. Vorrichtung nach Anspruch 6, **dadurch gekennzeichnet** , daß diese eine mit dem Kolben (4) über ein System von Stangen und Anschlägen verbundene Ablenkeinrichtung (3) aufweist, wobei die Ablenkeinrichtung (3) so angeordnet ist, daß sie den aus dem Hals (1b) der Flasche (1) durch den freibleibenden Raum zwischen der Innenflanke des Halses (1b) und der Außenfläche des Rohres (2) entweichenden warmen Luftstrom so ausrichtet, daß er an der Außenflanke des Halses (1b) und des Halsansatzes (1c) der Flasche entlangströmt.

8. Vorrichtung nach den Ansprüchen 6 bis 7, **dadurch gekennzeichnet**, daß die Ablenkeinrichtung (3), deren Achse mit der Achse der Flasche (1) deckungsgleich und die entlang dieser Achse bewegbar ist, sich gegen den Hals (1b) der Flasche (1) abstützen kann, um dessen Zentrierung durch an sich bekannte Mittel, und auch während der axialen Verlagerung der Flasche (1) sicherzustellen, wenn der Boden (1a) derselben, und dann der Körper der Flasche (1) selbst nach und nach zwischen den zwei sich drehenden Walzen (6) zerdrückt wird, mit der Ausnahme, daß im letzten Abschnitt des Zerdrückens Anschläge (9) verhindern, daß die Ablenkungseinrichtung (3) durch das Vorrücken mit den sich drehenden Walzen (6) in Kontakt gebracht wird.

9. Vorrichtung nach den Ansprüchen 6 bis 8, **dadurch gekennzeichnet**, daß die Ablenkeinrichtung (3) durch den Druck, den sie axial auf den Hals (1b) der Flasche (1) ausübt, es den zwei sich drehenden Walzen (6), gegen die sich der Boden (1a) der Flasche (1) an Kontaktpunkten (8) abstützt, erlaubt, die Flasche zwecks Zerdrücken besser anzutreiben.

10. Vorrichtung nach den Ansprüchen 6 bis 9, **dadurch gekennzeichnet**, daß die Oberfläche der sich drehenden Walzen (6) können gerändelt sein oder ein Relief aufweisen, oder mit versenkbaren oder nicht versenkbaren Spitzen versehen sein oder auch einen Belag aufweisen, der eine bessere Haftung an allen Außenflächen der Flasche beim Antrieb und Zerdrücken derselben sicherstellt.

11. Vorrichtung nach den Ansprüchen 6 bis 10, **dadurch gekennzeichnet**, daß die zwei sich drehenden Walzen (6), von denen mindestens eine durch an sich bekannte Mittel in Form einer Drehbewegung angetrieben wird, durch an sich bekannte Mittel gegeneinandergedrückt werden, und daß mindestens eine der sich drehenden Walzen senkrecht zu ihrer Drehachse so verlagert werden kann, daß eine Veränderung des Achsabstands der zwei Walzen möglich ist.

12. Vorrichtung nach den Ansprüchen 6 bis 11, **dadurch gekennzeichnet**, daß die Drehbewegung der sich drehenden Walzen (6) ununterbrochen oder unterbrochen sein kann und die Drehzahl dieser sich drehenden Walzen, wenn notwendig, während des Zyklus verändert werden kann, beispielsweise in Abhängigkeit ihres Achsabstandes.

13. Vorrichtung nach den Ansprüchen 6 bis 12, **dadurch gekennzeichnet**, daß einige der durch die Vorrichtung ausgeführte Vorgänge freiwillig für den Benutzer sichtbar gemacht sind.

## Claims

1. A process for reducing, by thermal softening and mechanical crushing, the volume occupied by an empty bottle, made from thermoplastic material, by the introduction of a flow of hot air into the bottle (1), through its neck (1b), by a tube (2) penetrating into the neck (1b), the flow of hot air thus introduced into the bottle (1) escaping therefrom by its neck (1b) by using the space left free between the inner side of the neck (1b) and the outer surface of the tube (2) which is introduced there, **characterised in that** the tube (2) is introduced deeply into the body of the bottle (1), in that its mouth (2a), from which the flow of hot air is ejected at a temperature equal to or higher than the melting temperature of the thermoplastic material forming the bottle, is positioned close to the inner face of the base (la) of the bottle (1), and in that the flow of hot air escapes from the tube (2) as rapidly as it is projected directly onto the said internal face of the base (1a).

2. A process according to Claim 1, **characterised in that** the flow of hot air which escapes from the neck (1b) of the bottle (1) by the space left free between the inner side of the neck (1b) and the outer surface of the tube (2) is taken up by a deflector (3) which directs it in such a manner that it flows along the outer side of the neck (1b) and of the collar (1c) of the bottle.

3. A process according to Claims 1 and 2, **characterised in that** while the bottle (1) is progressively crushed, firstly by its base (1a), between two rotary drums (6), the deflector (3) follows the bottle (1) over the available path.

4. A process according to Claims 1 to 3, **characterised in that** while just one portion of the collar (1c) of the bottle (1) and the neck (1b) of said bottle have not yet been crushed between the two rotary drums (6), the flow of hot air leaving the mouth (2a) of the tube (3) is projected frontally towards the neck (1b) of the bottle (1), the tube (2) and its mouth (2a) then being situated outside the cavity of the bottle (1).

5. A process according to Claims 1 to 4, **characterised in that** the flow of hot air can be interrupted at a determined moment during or after the crushing of each bottle.

6. An apparatus for the implementation of the process according to Claims 1 to 5, comprising a tube (2) which moves in a neck of a bottle and means for introducing a flow of hot air through the tube, **characterised in that** the movement positioning the tube (2) in the bottle (1) has as the drive unit the pressure which is exerted, in a cylinder (12), by the flow of air itself, not yet heated, on a piston (4) integral with the tube (2) the return of the tube (2) into the initial position being ensured by springs (14) or any other means known per se.

7. An apparatus according to Claim 6, **characterised in that** it comprises a deflector (3) joined to the piston (4) by a system of rods and stops, the said deflector (3) being designed to take up the flow of hot air which escapes from the neck (1b) of the bottle (1) by the space left free between the inner side of the neck (1b) and the outer surface of the tube (2) and to direct it so that it flows along the outer side of the neck (1b) and of the collar (1c) of the bottle.

8. An apparatus according to Claims 6 to 7, caracterised in that the deflector (3), the axis of which coincides with the axis of the bottle (1) and which moves along this axis, can come to rest on the neck (1b) of the bottle (1) to ensure its centring by means known per se and also during the axial displacement of the bottle (11), when the base (la) thereof then the body itself of the bottle (1) is progressively crushed between the two rotary drums (6), except clearly in the last portion of this crushing operation, stops (9) preventing the advance of the deflector (3) bringing it into contact with the rotary drums (6).

9. An apparatus according to Claims 6 to 8, **characterised in that** the deflector (3), by the pressure which it exerts axially on the collar (1b) of the bottle (1), allows two rotary drums (6), against which the bottom (1a) of the bottle (1) rests at the contact points (8), to better carry along the bottle for its crushing.

10. An apparatus according to Claims 6 to 9, **characterised in that** the surface of the rotary drums (6) can be knurled or have a relief or be equipped with retractable or non-retractable points, or even possess a covering/coating ensuring better adhesion with all the outer surfaces of the bottle during its entrainment and crushing.

11. An apparatus according to Claims 6 to 10, **characterised in that** the two rotary drums (6), at least one of which is rotationally driven by means known per se, are pressed against another by means known per se and in that one at least of the rotary drums may be moved perpendicularly to its axis of rotation so as to allow a variation of the space between the two drums.

12. An apparatus according to Claims 6 to 11, **characterised in that** the rotational movement of the rotary drums (6) may be continuous or discontinuous and in that the rotational speed of these drums may, if necessary, be varied during the cycle, for example as a function of the variation of the distance between them.

13. An apparatus according to Claims 6 to 12, **characterised in that** certain of the operations performed by the apparatus are deliberately made visible to the user.
